(19) Europäisches Patentamt
European Patent Office
Office européen des brevets

(11) **EP 3 671 611 A1**

(12) **EUROPEAN PATENT APPLICATION**

(43) Date of publication:
**24.06.2020 Bulletin 2020/26**

(51) Int Cl.:
***G06Q 30/06*** *(2012.01)*     ***G06Q 20/38*** *(2012.01)*

(21) Application number: **18382930.8**

(22) Date of filing: **17.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mobile Payments&Loyalty, S.L.**
**08028 Barcelona (ES)**

(72) Inventors:
- **Hayes, Jonathan**
  **Barcelona, 08028 (ES)**
- **Rebollo Monedero, David**
  **08028 Barcelona (ES)**
- **Forné Muñoz, Jordi**
  **08028 Barcelona (ES)**

(74) Representative: **Tribalyte Ideas**
**Gta. Quevedo 8, 6°2**
**28015 Madrid (ES)**

(54) **METHOD FOR ESTABLISHING USER-CONTROLLED PRIVACY SETTINGS IN PAYMENT SYSTEMS ACCORDING TO DATA PARAMETERS DEFINED AS METRICS OF AN ALGORITHMIC SPECIFICATION FOR THEIR COMPUTATION**

(57) Method, and related connected device, for establishing user-controlled privacy settings in payment systems according to data parameters defined as metrics of an algorithmic specification for their computation, comprising the steps of displaying a plurality of optional configuration profiles (4) regarding access permissions to the user's (2) personal data (41), selecting at least one self-assigned configuration profile (4) established by the user (2), sharing a varying amount of confidential data (42) of the user (2), based on the selected configuration profile (4) within the digital environment (1), such that the existing trade-off between privacy and usability is improved in personalised information systems, proposing new privacy metrics and privacy enhancing mechanisms, enabling implementation of a privacy-protection service for use with payment services, which may or may not be based on blockchain.

FIG.1

## Description

The present patent application relates to payment services and in particular, to the privacy of personal information when completing payment transactions. More specifically, the present invention describes a method whereby the users of a payment service may gain full information accountability, retaining ownership and control of their personal data. The present invention overcomes several deficiencies and limitations of the prior art by providing a system and method for self-assignment of privacy settings within a payment network or payment system.

To alert users about the levels of risk to which they are exposed when sharing personal information or when completing a transaction, data parameters indicating spending habits and demographic anonymity thresholds are defined as metrics of an algorithmic specification for their computation according to Claim 1, which incorporates notable innovations and advantages, and a related connected device upon which said methods may be employed.

BACKGROUND

The rise of Big Data in the information technology sector and the "on-demand economy" has led to a wide variety of networked systems that tailor the information-exchange functionality to meet the specific interests of their users and often, those of advertisers or other third-parties. Most of these personalised information systems capitalise on, or lend themselves to the construction of personal profiles. The information may be gathered either when voluntarily declared by a user or may be inferred from a user's past activity and spending patterns.

Thereafter, the transaction data is subjected to intense analysis, and within the field of payments, it is heavily scrutinised, with multiple companies offering "insights" into consumer spending. This practice of 'profiling', or the step of creating person-specific identifiers lies at the heart of personalised information systems. Over time, the collection and processing of all these actions allow such systems to extract an accurate snapshot of an individual's habits or interests and tie them to related demographic data in a 'user profile', without which personalised services could not be provided. Profiling is therefore what enables these systems to determine which information is relevant to users at a given point in time. However, at the same time, this practice is the source of serious privacy concerns given that most of the time, the individual whose data has been gathered is not able to access it - nor is even aware that such a profile exists.

The current state of affairs is neatly summed up by Daniel Weitzner, Director of the MIT Internet Policy Research Initiative: "New information technology is at the heart of so many of the privacy challenges we face today big-data, Internet of things, metadata analysis but the technology we actually use to solve privacy problems is just this side of the Stone Age"

A 2008 paper entitled "Information Accountability" authored by Abelson, Berners-Lee, Feigenbaum & Weitzner, demonstrated that encryption and access control alone were not sufficient to protect privacy. Instead, the authors suggest the need for scalable, automated systems to track and analyze actual information usage against machine-readable rules. With accountable systems in place, it is possible to alert users when they may be doing something wrong with their data.

At present users are at a disadvantage vis à vis a service provider or data holder and it is often alleged that the data stored is "anonymous." However, several scientific studies point out implicit weaknesses in the way private information and user data are actually processed. In particular, in information systems, the most extensively studied aspects of privacy deal with unauthorized access to sensitive data, by means of authentication, policies for data-access control and confidentiality, implemented as cryptographic protocols. However, the provision of confidentiality against unintended observers fails to address the practical dilemma when the intended holder of the information is not fully trusted, not to mention when the data collected are to be made accessible to external parties, or openly published for scientific studies where sensitive information may be correlated with demographics.

Simple demographic data permits unique identification of individuals even when the data are allegedly anonymized. Data holders often collect person-specific data and then release derivatives or sub-sets of the collated data on a public or semi-public basis after supposedly removing all explicit identifiers, such as name, address and phone number or gender.

However, as demonstrated in a well-known study by Sweeney[1], a leading academic in the field of privacy, 87% of the population in the United States might be unequivocally identified solely on the basis of the trifecta consisting of their date of birth, gender and 5-digit post code. This is in spite of the fact that in the year of the census data analysed, 1990, the U.S. had a population of over 248 million. This notorious revelation illustrates the discriminative potential of the simultaneous combination of a few demographic attributes, which, considered individually, would hardly pose a real anonymity risk. Ultimately, this simple observation means that the mere elimination of identifiers such as first and last name, or social security numbers (SSN), is grossly insufficient when it comes to effectively protecting the anonymity of the participants of statistical studies containing confidential data linked to demographic information - or for that matter, allegedly aggregated and anonymized data obtained from consumer transactions.

[1]L. Sweeney, "Simple demographics often identify people uniquely, "Carnegie Mellon Univ. Privacy Working Paper 3.

Pittsburgh,

Hence there is an obvious need to improve the existing trade-off between privacy and usability/utility in personalised information systems. By proposing new privacy metrics and privacy-enhancing mechanisms consumers will not only better comprehend the inherent risks involved when sharing their personal information, they will also possess the tools to manage their data and be able to responsibly account for it.

DESCRIPTION OF THE INVENTION

The present disclosure relates to payment networks and payment service providers and in particular, to the privacy of personal information in payment transactions. More specifically, the present specification describes a method whereby the end-users of a payment service may gain full information accountability, retaining ownership and control of their personal data. In order to inform users about the level of risk to which they are exposed when sharing personal information, privacy settings are modelled on given data parameters. For instance, indicators of consumer habits or spending patterns, and demographic anonymity thresholds are defined as metrics of an algorithmic specification for their computation according to Claim 1, which incorporates notable innovations and advantages over prior art, and a related connected device upon which said methods may be employed.

One specific goal of this patent application is the establishment of personal information metrics for the development and deployment of a privacy-protection service, enabling users to achieve cash-like anonymity when acquiring goods or services with a payment system. This is attained by means of mechanisms to inform and alert users about exposure of their personal data, and just particularly to a mobile payment system whether or not transacted through an online trusted third party in control of the data exchanged. The advent of distributed-ledger technologies or blockchain offers the potential for every transaction to be recorded, forever. Hence the importance of controlling and monitoring the personal data shared *ab initio.*

Thus, when measuring the privacy risk for a given end-user, an assessment is made of the private information that can be accessed by any one platform, and the user is alerted about the potential for this private information to be stored by a service provider or leaked to another seller, neither of them necessarily assumed to be trusted. In other words, users should be able to fully trust their privacy dashboard although they may not trust the other parties. The rationale is to provide an effective, validated user identity, without revealing the actual attributes of the individual.

The following sections loosely refer to end-users as clients of a privacy-protection service or privacy dashboard, although many of the privacy risks considered here may extend to companies or identifiable organizations to which these individuals belong.

Additionally, a description is provided below of the anatomy of the user profile and the mechanism that enables users to specify which information they wish to obscure from a payments provider and self-assign certain properties to the identity they choose to share. Further, we present a methodology for a quantitative measurement of anonymity and privacy of user profiles.

The present disclosure addresses the privacy requirements and metrics for the initial deployment of a privacy-protection service or privacy dashboard. The focus is placed on two important aspects; the configuration of the user profile and the quantitative measurement of anonymity and privacy thresholds.

For the configuration of the user profile, user information is classified into three categories: personal data, interests or content, and location and time information (i.e. who, what, where.) During the initial development of the privacy-protection service or privacy dashboard, it is recommended that the former two categories be addressed first, leaving location and time information for a further embodiment. Furthermore, the current solution proposes an embodiment of a user-friendly and flexible configuration methodology that easily permits users to mask their original profile attributes into a set of alternative self-managed, self-assigned profiles, to be used for a certain set of sellers. Specifically, we define three types of alternative profile categories: Full identity, pseudonymized and anonymous.

Two privacy metrics are defined, the first conveying the value of anonymity, and the second, the demographic data identified with the interests or content disclosed. The computation of said metrics entails the estimation of histograms of relative frequencies of activity along predefined categories of interest. This approach carefully addresses the reliability issue stemming from user profiling based on insufficient activity. Data scarcity is undoubtedly to be expected in general during the initial deployment of the privacy-protection service, but also in particular for users newly added to the system. It would be recommendable that histograms be initially computed according to Laplace's rule of succession, as a moving average including a robust initial profile, tending towards the usual computation of relative frequencies directly from the observed activity. When a profile is declared explicitly by the user, it may be selected as initial profile instead.

Both privacy metrics, anonymity and demographic transaction data or interests, are normalized as percentages to convey an intuitive meaning to users, thus offering easy-to-interpret, useful feedback when configuring their privacy options. The former metric, anonymity, will inform the user of the degree to which any quasi-identifier disclosed under a pseudonym or presumably, anonymously can be exploited to narrow down the uncertainty on the identity of the individual. The latter metric, privacy of interests/content, reports the level of sensitivity of the demographic data revealed, with regard to declared or inferred purchasing interests and transaction footprints. Roughly speaking, the latter measures the sensitivity of confidential data, while the former quantifies the difficulty of identifying the individual to whom the data belongs.

As both metrics can be loosely interpreted as independent probabilities, they may be combined in the form of a product, or a geometric average, should a single metric be preferred. We feel inclined to suggest that they be provided separately or at least in addition to any combined metric, as they quantify different types of privacy risks, along with a succinct explanation of their meaning, based on this document.

The terminology of the first metric, based on k-anonymity, may also be referred to as 'demographic anonymity'. The second metric, based on purchasing preferences or a transactional footprint, may be termed 'privacy of consumer habits' in lieu of 'sensitivity'. There are several reasons for this, one being that these metrics measure privacy gain rather than loss in the range [0,1] (equivalently [0,100] %), where 1 (or 100%) means perfect privacy, and 0, complete loss. 'Sensitivity' may be interpreted in the opposite way.

The metric 'demographic anonymity' measures the relative number of individuals sharing the same demographic features exposed by the customer, such as location, physical traits, and any publicly available data linked to the customer's identity, on the basis of which the customer could be re-identified. The second metric, 'privacy of consumer habits', quantifies the likelihood that certain consumer preferences, such as purchases along certain predetermined categories of interest, are shared by other customers. And if the data dimensionality is too high, it may enable re-identification.

Within the anatomy of the User Profile and Configuration of Privacy Options, a classification shall be provided of the private data that a user may disclose when using the privacy-protection service or privacy dashboard. Afterwards, a mechanism shall be described that allows users to configure which information they want to obscure from the provider of the service. Finally, depending on the configuration chosen, at least three different types of user profiles shall be described.

The field of statistical disclosure control (SDC) investigates formal requirements and mechanisms in the control of the risk that information about specific individuals be extracted from amongst statistical summary results. Although SDC commonly deals with privacy in database publishing, the fundamental structure of its privacy model may be adapted to the architectural requirements of user profiles in the privacy-protection service or privacy dashboard for a more systematic analysis. To clarify, the term "user profile" referred to involves the entire user record, encompassing personal data, transactional data, purchasing interests explicitly declared or inferred from user activity, sharing of that data on other networks, GPS location or geotagging and any time-based patterns.

Statistical disclosure control (SDC) concerns the post-processing of the demographic portion of the statistical results of surveys containing sensitive personal information, in order to effectively safeguard the anonymity of the participating respondents. In the SDC terminology, a microdata set is a database table whose records carry information concerning individual respondents, either people or organizations. This database commonly contains a set of attributes that may be classified into identifiers, quasi-identifiers and confidential attributes.

Firstly, identifiers allow the unequivocal identification of individuals. This is the case of full names, SSNs or medical record numbers, which would be removed before the publication of the microdata set, in order to preserve the anonymity of its respondents. Secondly, 'quasi-identifiers', also called 'key attributes', are those attributes that, in combination, may be linked with external, usually publicly-available information to re-identify the respondents to whom the records in the microdata set refer. Examples include age, address, gender, job, and physical features such as height and weight. Finally, the dataset contains confidential attributes with sensitive information on the respondent, such as salary, purchasing preferences, political affiliation, religious beliefs, and health conditions. The classification of attributes as key or confidential may ultimately rely on the specific application and the privacy requirements the microdata set is intended for.

A primary field of application, in which confidential information linkable to demographic variables may provide enormous data utility and at the same time require special privacy measures, is targeted advertising. Part of the success of major search engine companies and social media platforms is due to this lucrative business who rely on this personal data, as do other well-known online retailers. We shall illustrate some fundamental aspects of SDC with a brief example in that context. As a matter of fact, the range of applications of SDC is as broad as the need for data combining demographics and sensitive information, including socioeconomic and medical research, healthcare, pharmacology, most types of insurance, social networks, e-voting, news, entertainment, cybersecurity and fraud detection, and any form of large-scale personalised and community-based recommendation systems.

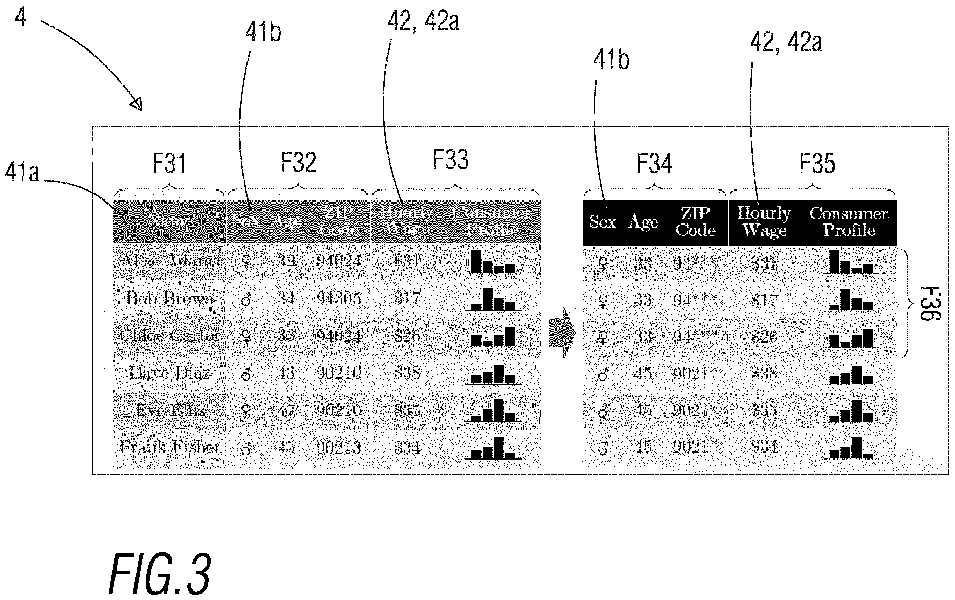

Intuitively, the perturbation of numerical or categorical quasi-identifiers enables us to preserve privacy to a certain extent, at the cost of losing some of the 'data utility', in the sense of accuracy with respect to the unperturbed version. '*k*Anonymity' is the requirement that each tuple of key-attribute values be identically shared by at least *k* records in the dataset. This may be achieved through the 'microaggregation' approach illustrated by the synthetic example depicted in Fig. 3, where gender, age and POST code are regarded as quasi-identifiers, and hourly wage and consumer profile as confidential attributes. Said profile is simply represented as a histogram of online activity along certain predefined categories of interest. Rather than making the original table available, we publish a *k*-anonymous version containing aggregated records, in the sense that all quasi-identifying values within each group are replaced by a common representative tuple. As a result, a record cannot be unambiguously linked to the corresponding record in any external sources assigning identifiers to quasi-identifiers. In principle, this prevents a privacy attacker from ascertaining the identity of an individual for a given record in the microaggregated database, which contains confidential information.

In Figure 3, a conceptual example of *k*-anonymous micro-aggregation of published data with k=3 may be seen, showing hourly wages and consumer profiles as confidential attributes, in relation to demographic variables, namely gender, age and post code, as quasi-identifiers.

Ideally, microaggregation algorithms strive to introduce the smallest perturbation possible in the quasi-identifiers, in order to preserve the statistical quality of the published data. More technically speaking, these algorithms are designed to find a partition of the sequence of quasi-identifying tuples in *kk*-anonymous cells, while reducing as much as possible the distortion incurred when replacing each original tuple by the representative value of the corresponding cell.

For numerical key attributes representable as points in the Euclidean space, the mean-squared error (MSE) is the usual criterion to quantify said distortion. Data utility is measured inversely as the distortion resulting from the perturbation of quasi-identifiers. As Figure 3 illustrates, *k*-anonymous microaggregation may be adequately regarded as a minimum-distortion quantizer design problem with a constraint on the size of the quantizer cells.

For the sake of showing a concrete example of *k*-anonymous microaggregation algorithm, we describe the operation of one of the algorithms that constitute the *de facto* standard in numerical microaggregation, known as maximum distance to average vector (MDAV), as a practical evolution of a multivariate fixed-size microaggregation method.

A systematic, exhaustive analysis of privacy risks involves focusing on the following two dimensions of privacy:

- First, identifying attributes. This encompasses any personal information identifying or narrowing down the identity of an individual, typically obtainable by means external to the system.
- Secondly, confidential attributes. These include any data considered to be sensitive and thus to be protected within the system, explicitly declared or inferred from online or offline activity. Confidential attributes may be classified for the purposes of a privacy-protection service or privacy dashboard into transaction data or purchase interests, on the one hand, and GPS location data, on the other.

Specifically, we consider three different categories of private data within a user profile in the privacy-management service or privacy dashboard:

- personal data (*inter alia* Date of birth, gender, place of residence, ethnicity)
- transaction data or purchasing interests, and
- location and time data.

In correspondence with the SDC model, personal data consists of both unique identifiers and quasi-identifiers, whereas purchasing interests and location and time information constitute confidential attributes.

By personal data we understand the collection of (unique) identifiers of a user as well as quasi-identifiers included in their profile.

- Unique identifiers, such as full name, phone number or even the profile picture uploaded to the privacy-protection service or privacy dashboard, allow the unequivocal identification of that user. For example, banks are required to hold personal details for KYC (Know Your Customer) and compliance reasons. A payment service provider in Europe such as an AISP (Account Information Service Provider) or a PISP (Payment Initiation Service Provider) may obtain customer-authorized access to that data, which is then shared with a third-party.

- Quasi-identifiers, also called key attributes, are those attributes that may be linked with external information in order to re-identify the user in question, or to substantially narrow down their identity among a small group of individuals. This may be accomplished by jointly cross-referencing the entire tuple of values of the quasi-identifiers in the user profile with their correspondences in any external data readily available. Examples of quasi-identifiers include job, address, age and gender, information that users may be willing to facilitate in the sign-up process for privacy-protection service or privacy dashboard. This information may be replicated elsewhere, possibly linked to uniquely identifying data or even additional confidential attributes.

From the standpoint of privacy protection, mere removal of unique identifiers in profile pseudonymization or anonymization is commonly insufficient, due to the presence of quasi-identifiers.

Regarding the purchasing Interests and Activity Data or behavior exhibited by the user when shopping, these purchasing interests may be declared explicitly by the user or inferred from their online and offline activity. Conceptually, the private data is modelled as a histogram of relative frequencies along predefined categories of interest.

Regarding location and time data, being private data, refers, on the one hand, to location information such as GPS position or phone-network triangulated data, and on the other hand, to time information, e.g., when the user has visited a store or made an online purchase with a participating retailer.

Regarding the configuration settings, we consider a simple yet usable approach that allows users to manually configure which information is shown to a given service provider and which is not. With manually, we mean that users will essentially have to activate an on/off setting themselves. The privacy-protection service or privacy dashboard does not make any explicit, concrete recommendation regarding which information should be disclosed or hidden, at this point of the deployment however, the recommended starting point will suggest privacy protection to be as high as cash-like anonymity. The provision of the intuitive metrics of the described Anonymity and Sensitivity may very well be regarded as useful feedback to the user in this regard. Future embodiments contemplate automated decisions or sophisticated privacy-enhancing mechanisms perturbing, modifying or altering any of the sensitive information identified previously, employing Artificial Intelligence and smart contracts built on Blockchain technology.

This on/off setting will enable users to show/hide each piece of data along each of the three categories examined above in the previous subsection. For example, users could decide to hide certain quasi-identifiers they may be reticent to disclose, e.g., age or gender, while showing the rest of their profile data. Similarly, users could also choose which categories of interests or content they are disposed to disclose when purchasing in a given store.

By using this flexible approach, users will be able to easily mask their original profiles from the service provider's standpoint, i.e., on the front-end. The full transaction information would only be retrievable with a warrant or court order, otherwise remaining fully anonymous and with end-to-end encryption of the data. The set of alternative configurations will be referred to as the alternative profiles. Each of the alternative profiles will therefore store a specific configuration, to be used with a certain seller or groups of sellers, depending the user's privacy requirements of the moment. In other words, alternative profiles with saved privacy settings, possibly with different pseudonyms, will be chosen to exhibit different purchase preferences across different retailers.

Regarding the types of Alternative Profiles, depending on whether the user is willing to reveal their unique identifiers or not, we may distinguish between different types of alternative profiles.

Identified Alternative Profiles: a user who does not mind unveiling all their unique identifiers, e.g., name, phone number and ID picture. Note that this does not mean, however, that this user wants to show the rest of their data included in the profile. It simply means that the user is comfortable showing their ID, perhaps due to a legal requirement, such as an airline or hotel check-in.

Unidentified Alternative Profiles: On the other extreme, we contemplate a user who does not want to disclose any of those unique identifiers. To this end, the user opts for using a pseudonym when communicating with sellers. We consider two possible types of alternative profiles depending on the reusability of these pseudonyms.

With the pseudonymized alternative profiles, the user is disposed to use the same pseudonym when interacting repeatedly with a given retailer. This reusable pseudonym enables the retailer to track the user's activity, learn about their interests, and ultimately provide them with personalised recommendations. Such kind of alternative profiles also enable users to effectively remove all data collected associated with the pseudonym at any point in time, simply by refraining from using it in the future.

With the anonymous alternative profiles, the user does not want to be tracked or monitored by the seller. In this case, we contemplate the use of non-reusable pseudonyms. In other words, the user uses a different pseudonym each time they make a payment. Note that it does not imply that the user employs different on/off settings for the rest of the sensitive data. That is, even though these profiles do not contain a reusable identifier, they do allow registering reusable privacy configurations.

By using this form of identity perturbation, note that the privacy-protecion service or privacy dashboard is acting as a traditional anonymization proxy, thus effectively removing a customer's identity from a transaction. This is the case when the user chooses non-reusable pseudonyms for their collection of alternative profiles. When users opt for the privacy-protection service or privacy dashboard pseudonym functionality, they achieve a certain level of anonymity while enabling the seller to automatically create a profile of interests based on the history of purchases linked to a reusable pseudonym.

More particularly, the method for establishing user-controlled privacy settings in payment systems according to data parameters defined as metrics of an algorithmic specification for their computation, comprises the steps of displaying a plurality of optional configuration profiles regarding access permissions to the user's personal data, selecting at least one configuration profile established by the user, sharing a varying amount of confidential data of the user, based on the selected configuration profile within the digital environment, such that there is an improvement in the existing trade-off between privacy and usability in personalised information systems.

In addition, the properties or attributes assigned to a given profile by the user may also be time-defined, i.e. the user may establish a single-use token with a given identity which expires immediately after first use or user may determine a longer period of validity of the credentials provided.

In particular, the method for establishing user-controlled privacy settings in payment systems according to data parameters defined as metrics of an algorithmic specification for their computation, may include, not being limited to, implementation of smart contracts on a blockchain. For the purposes of this disclosure a blockchain is understood as a distributed ledger with a continuously growing list of records, called blocks, which are linked and secured using cryptography. Each block typically contains a cryptographic hash of the previous block, a timestamp and transaction data. By design, a blockchain is inherently resistant to modification of the data. Once recorded, the data in any given block cannot be altered retroactively without the alteration of all subsequent blocks, which would require collusion of the network majority. For the purposes of this disclosure, a blockchain may be public or permission-based.

According to another aspect of the invention, the configuration profile comprises personal data and confidential data. The configuration profile comprises at least the information of identifiers and key attributes, as personal data, and confidential attributes, as confidential data. The confidential attributes may be general interests or purchasing habits and location and time information. They may also be identifying attributes based on demographic data. All aforementioned data and information may be shared or not, depending on the configuration profile established by the user.

According to a preferred embodiment of the invention, the method for establishing user-controlled privacy settings in payment systems according to data parameters defined as metrics of an algorithmic specification for their computation, further comprises the step of determining a privacy metric as a quantitative measurement of a privacy risk associated with at least one configuration profile. The privacy metrics defined are appropriately normalized in the form of a percentage, in order to give users a more intuitive result, with 0% indicating the absence of privacy or the maximum risk incurred, i.e. all information is being shared, and 100% the maximum privacy protection attainable, i.e. complete anonymity, with no personally identifiable information being shared. Alternatively privacy metrics take on values in the interval [0-1].

The quantitative measurement of privacy risks associated with a particular set of alternative profiles by the system represents a highly convenient form of feedback for users, resulting in favor of user privacy. The metrics of the present invention inform users of the privacy risks incurred in an intuitive manner. Further, privacy metrics will pave the way for the assessment, comparison, optimization and continuous improvement of user-configurable, privacy-enhancing mechanisms for later phases of the further developments of the invention.

According to what is observed in the anatomy of user profiles, private data is usually dissected into identifiers and confidential attributes, which may also be subdivided into identifiers, quasi-identifiers, purchasing interests and location and time information.

In accordance with the privacy dimensions aforementioned, two related privacy metrics for each user profile are defined, or for each alternative profile, when several are in use. On the one hand, an anonymity metric will inform the user of the degree to which any quasi-identifier disclosed under a pseudonym or presumably anonymously can be exploited to narrow down the uncertainty on the identity of the individual. On the other hand, a sensitivity metric will report the effective amount of confidential information revealed, with regard to purchasing interests declared or inferred, relative to the overall population.

As mentioned, the privacy metrics defined are appropriately normalized and expressed in the form of a percentage, in order to provide users with a more intuitive result, where 0% indicates the absence of privacy or the maximum risk incurred, and 100% the maximum privacy protection attainable.

More specifically, the privacy metric is a demographic anonymity metric '$\mathscr{A}$', defined

$$\mathscr{A} = \frac{k-1}{n-1},$$

wherein '$n$' is the total number of users of the digital environment, and '$k$' is the number of users of the digital environment sharing a common value for a tuple of key attributes. The proposed criterion is a measure of the dimensionality of the data, the degree of difficulty to associate private data with an identity. The system simply calculates the number of users whose profiles have the same quasi-identifying information. With the term 'tuple' it has to be understood that reference is made to a list of ordinated elements.

In the context of statistical databases, a data publisher wishes to disclose aggregate information about a population, but without disclosing information that would enable an attacker to infer sensitive information about the users in that population.

As mentioned, the information available to a data publisher frequently can be classified into identifying attributes, quasi-identifiers or key attributes, and confidential attributes. The first two kinds of attributes coincide with the information classified as personal data, which we defined in previous subsections. The confidential data in SDC, however, does not necessarily refer to user interests, but to other sensitive information such as salary, religious beliefs, political affiliation and health condition.

From the point of view of privacy protection, mere removal of identifiers is in general insufficient in the publication of data sets, for example, for statistical studies. Data holders often collect person-specific data and then release derivatives of collected data on a public or semi-public basis after removing all explicit identifiers, such as name, address and phone number. As mentioned above when discussing the concept of quasi-identifiers, 87% of the population in the United States may be re-identified solely on the basis of the trifecta consisting of their Postcode, gender, and date of birth. Intuitively, perturbation of numerical or categorical key attributes enables us to preserve privacy to a certain extent, at the cost of losing some of the data usability, in the sense of accuracy with respect to the unperturbed version.

In the field of SDC, k-anonymity is the requirement that each tuple of key-attribute values be shared by at least k records in the original data set. This requirement may be achieved by the data publisher through a variety of perturbative mechanisms such as microaggregation, suppression or generalization. Accordingly, rather than making the original data set available, the publisher releases a k-anonymous version containing aggregated records, in the sense that all key-attribute values within each group are replaced by a common representative tuple. As a result, a record cannot be unambiguously linked to the corresponding record in any external data set assigning identifiers to key attributes. In principle, this prevents a privacy attacker from ascertaining the identity of user for a given record in the perturbed data set, which contains confidential information.

The present invention aims to quantify the private information leaked as a result of releasing the quasi-identifier attributes of a given alternative profile. Considering the similarity between the problem of SDC and the one at hand, using k-anonymity is proposed for measuring the anonymity of personal, quasi-identifying data. k-anonymity is directly extrapolated as the requirement that each tuple of quasi-identifiers values be shared by at least k users in a database of the privacy-protection service or privacy dashboard. Conceptually, the proposed criterion is a measure of the difficulty to associate private data with an identity.

The system simply calculates the number of users whose profiles have the same quasi-identifying information. In fact, our measure of anonymity should be shown to the user in relative terms rather than in absolute terms. As mentioned, the anonymity metric is defined as

$$\mathscr{A} = \frac{k-1}{n-1},$$

where $n$ is the total number of users in the privacy-respecting service or privacy managing platform, and $k$ the number of users within the privacy-protection service or privacy dashboardsharing a common value for the tuple of quasi-identifiers.

When the number of users in the privacy-protection service or privacy dashboard is large enough, this relative measure should be representative of the k-anonymity within a larger population of reference, for example, a neighborhood or city in which the user is known to belong. When the population of users in the privacy-protection service or privacy dashboard is small, this extrapolation will not be so accurate.

Clearly, if the user employs an identified alternative profile, then $k = 1$ and the level of anonymity attained by this user is concordantly zero. The use of pseudonymized and anonymous alternative profiles may enhance anonymity. However, it may happen that a user does not share the same values of quasi-identifiers with any other user within the privacy-respecting service or privacy managing platform. In this case, even though the user is using reusable or single-use pseudonyms, $k = 1$ and the degree of anonymity is again zero.

On the other extreme, these pseudonymized and anonymous alternative profiles may lead to the maximum level of anonymity, attained when all users share the same values of quasi-identifiers, that is, $k = n$ Another way to achieve this maximum degree of anonymity is by using anonymous profiles that hide all quasi-identifying attributes.

Therefore, for pseudonymized and anonymous alternative profiles any $1 \leq k \leq n$ is possible. Accordingly, our measure of anonymity $\mathscr{A}$ takes on values in the interval [0.1] and thus may be regarded as a normalized form of k-anonymity. Lastly, we recommend that the value reported to the user be in the form of a percentage

More particularly, the profile of purchasing habits or interests of each user is defined as a discrete probability distribution across predefined categories of interest. In this way there is available a quantitative metric of the level of sensitivity of the confidential data revealed, particularly with regard to the purchasing interests and habits, explicitly declared by the user or inferred from its online or offline activity. This subsection specifies the metric in question, on the basis of our research on related problems. Precisely, we shall accomplish this in two steps.

Additionally, the profile of purchasing interests of the overall population of users is defined as a discrete probability distribution across predefined categories of interest, such that an analogous profile is defined for the overall population of users.

According to another preferred embodiment of the invention, a discrepancy between the user's probability distribution and the overall population's probability distribution is measured by means of the Kullback-Leibler divergence, such that there is available a measure of the information effectively revealed by disclosing the user's profile of interests. The information-theoretic concept of Kullback-Leibler divergence is used to quantify the discrepancy between the user's probability distribution and the overall population's, which we construe as a measure of the information effectively revealed by disclosing the user's profile of interests.

Advantageously, that the privacy metric is a privacy of consumer habits metric '$\mathscr{S}$', defined as the probability

$$\mathscr{S} = \Pr\{D(P\|\bar{p}) \geq D(p\|\bar{p})\}$$

,

wherein '$P$' is a random variable representing the individual configuration profile of a random user, and '$p$' is the individual configuration profile of the specific user to whom the metric refers. In this way, a quantitative metric is obtained of the level of sensitivity of the confidential data revealed, particularly with regard to the purchasing interests and habits explicitly declared by the user or inferred from her online or offline activity.

The metric of sensitivity of purchasing interests is ultimately based on profiles of categorized activity for individual users and for the overall population. It is assumed that a wealth of logged activity is available to reliably estimate such profiles, leading to particularly simple computational procedures.

Rather than providing users with the divergence directly, $D(p\|\bar{p})$, a much more intuitive, meaningful quantity is recommended instead. It is suggested that the percentile rank is given instead, as the percentage of users of the privacy-protection service or privacy dashboard, with a higher, that is, worse, or equal divergence.

More formally, let $P$ be a random variable representing the individual profile of interests a random user, and let $p$ denote the individual profile of the user at hand. The sensitivity, or 'privacy of consumer habits', $\mathscr{S}$ of $p$ is defined in the context of the population as the probability

$$\mathscr{S} = \Pr\{D(P\|\bar{p}) \geq D(p\|\bar{p})\}.$$

In this manner, a percentile rank of 100% conveys the meaning of "best privacy", in the sense that all users have worse divergence, presumably because the divergence of the user at hand attains its minimum value of zero, making the user's profile of interests $p$ uninformatively match the population's $\bar{p}$. Conversely, a percentile rank of 0% means that no other user has higher divergence, and thus the profile of interests of the user in question unfortunately has the "worst privacy".

Note that Gibbs' inequality guarantees that even with a few users, a null divergence will translate into a full score. However, a full score need not imply a null divergence during the initial deployment of privacy-protection service or privacy dashboard. Naturally, the percentile rank should be updated periodically, as the profile of interests of the user in question and that of other users change. The estimator of "profile of interests" under data scarcity should be conveniently biased towards the population's profile, which will translate into higher sensitivity scores when hardly any data activity has been logged, as users should expect.

More specifically, the Kullback-Leibler divergence is defined as

$$D(p\|\bar{p}) = \sum_{i=1}^{m} p_i \log \frac{p_i}{\bar{p}_i}$$

such that digital environment maintains a histogram '$p$' relative frequencies of purchasing interests and online activity across a predefined set of categories, for each individual user.

In a first case, the user chooses to reveal her profile $p$ of interests entirely, for all $m$ categories, as part of the information supplied within a user profile employed in a transaction with a given service provider or seller. The amount of information effectively disclosed shall be measured via the Kullback-Leibler divergence between the user profile of interests $p$ and that of the population's, $\bar{p}$, given by

$$D(p\|\bar{p}) = \sum_{i=1}^{m} p_i \log \frac{p_i}{\bar{p}_i},$$

where the basis of the logarithm is entirely arbitrary, but consistent among related computations. Gibbs' inequality states that $D(p\|\bar{p}) \geq 0$, with equality if and only if $p = \bar{p}$. Conceptually, $D(p\|\bar{p})$ is a measure of discrepancy between $p$ and $\bar{p}$.

When addressing the estimation of the population's profile $\bar{p}$ under data scarcity, it is noted that the estimate

$$u = \left(\frac{1}{m}\right)_{i=1}^{m}.$$

was biased towards the uniform distribution            Formally speaking, in the special case when $\bar{p} = u$, $D(p\|u) =$ $\log m - H(p)$, where $H(p)$ is the Shannon entropy

$$H(p) = -\sum_{i=1}^{m} p_i \log p_i.$$

The closer the user's profile of interests $p$ to the population's $\bar{p}$, more precisely, the lower the divergence, the higher the privacy attained. In the special case when $\bar{p} = u$, this is equivalent to saying that the closer $p$ to $u$, the higher the entropy or uncertainty of the interests of the user.

The Kullback-Leibler divergence generalizes the concept of Shannon entropy to account for a secondary distribution serving as reference, which gives it the alternative name of "relative entropy". Shannon entropy is a measure of uncertainty, essentially equivalent to Kullback-Leibler divergence when the distribution of reference is uniform, modulo a negative affine correspondence. In this case, minimizing divergence is equivalent to maximizing entropy, and thus, uncertainty. This divergence is also related to the concept of mutual information.

Another advantage in the use of Kullback-Leibler divergence as a privacy metric stems from Jaynes' rationale for maximum entropy methods, which finds successful application in problems as diverse as Burg's method for power spectral estimation, the Maxwell-Boltzmann probability distribution of particle velocities in a gas of known temperature, or the use of log-linear models, which arise as the solution to constrained maximum entropy problems in computational linguistics. Loosely speaking, Jaynes' rationale enables us to construe the Kull-back-Leibler divergence of a given profile with respect to the population's as a measure of how uncommon that given profile is among users, and thus, of how revealing. When a uniform profile of reference is selected, the corresponding measure of commonality is given by the Shannon entropy of the given profile.

More particularly, '$p$' is defined as $p = (p_i)_{i=1}^{m} = (p_1, ..., p_m)$, as a probability mass function (PMF) on the

$$\sum_{i=1}^{m} p_i = 1.$$

alphabet $\{1,...,m\}$, satisfying $p_i \geq 0$ and

The privacy-protection service or privacy dashboard maintains a histogram $p$ of relative frequencies of purchasing interests and online activity across a predefined set of $m$ categories, for each individual user. Mathematically,

$$p = (p_i)_{i=1}^{m} = (p_1, ..., p_m)$$

is a probability mass function (PMF) on the alphabet $\{1,...,m\}$ satisfying

$$p_i \geq 0 \text{ and } \sum_{i=1}^{m} p_i = 1.$$

This profile $p$ may be computed on the basis of declared interests, or logged activity adequately categorized.

For a reliable computation of this histogram $p$ and the corresponding privacy metric from tracked user activity, it is highly recommended to keep the number $m$ of categories to a minimum, and concordantly to the highest level in a hierarchical decomposition. In fact, for the purpose of computing the sensitivity metric defined later, condensed profiles resulting from coarser regrouping into a small number $m \leq 10$ of representative categories is strongly recommended, even if the profiles of interests intended to be measured are expressed a fine-grained hierarchical categorization.

$$p_i = \frac{\text{\# of occurrences in category } i}{\text{total \# of occurrences}} = \frac{n_i}{n}$$

Furthermore, $p_i$ is defined as

In the case when $p$ is estimated from a series of purchases on categorized domains, a training period is required before any computation may be construed as meaningful and reported to the user. Let $n_i$ denote the amount of activity in category $i$, and $n = \sum_{i=1}^{m} n_i$ the total activity, for the user at hand. Recall that the maximum-likelihood (ML) estimate of a PMF dictates the intuitive computation consisting in the histogram of relative frequencies directly observed, that is,

$$p_i = \frac{\text{\# of occurrences in category } i}{\text{total \# of occurrences}} = \frac{n_i}{n} .$$

Naturally, for this estimate to be reliable, the number of purchases $n$ must be much higher than the number $m$ of categories, which we loosely denote as $n \gg m$. Generally, the former should be at least ten times the latter. The issue of profile estimation for new users with insufficient data will be addressed shortly. It is assumed that this procedure is applied to long-term users for whom extensive data is available.

$$\bar{p} = \frac{1}{\text{\# of reliable users}} \sum_u p^{(u)}$$

Additionally, $\bar{p}$, is defined as ' such that the digital environment maintains a histogram '$\bar{p}$' of relative interests for the overall population.

Analogously, the privacy-protection service or privacy dashboard maintains a histogram $\bar{p}$ of relative interests for the overall population, an aggregated version on the same $m$ predefined categories, averaging the individual profiles $p$. For reliability, only long-term users with sufficient activity are considered that is, for whom $n \gg m$, so that the individual profile can be computed via the ML estimate aforementioned. More precisely, let $p^{(u)}$ denote the profile of interests of each sufficiently reliable user $u$. The population's profile is defined as the average

$$\bar{p} = \frac{1}{\text{\# of reliable users}} \sum_u p^{(u)} .$$

This average is a fundamental constituent of the sensitivity metric described, and it is not weighted by the various amounts of activity of each user. Because of this, it cannot be computed on the basis of categorized activity counts $n_i$ completely disregarding the users involved.

More particularly, '$\bar{p_i}$' is the component '$i$' of '$\bar{p}$', where $\bar{p}_i$ represents the average digital activity, online or offline, or aggregated interests or transactions of the general population on the specific predefined category i.

According to a preferred embodiment of the invention, the privacy metric is a combined privacy metric '$\mathscr{P}$' of the demographic anonymity metric and the privacy of consumer habits metric, defined as

$$\mathscr{P} = \sqrt{\mathscr{A}\,\mathscr{S}}$$

We have defined two privacy metrics, namely the anonymity $\mathscr{A}$ of the quasi-identifiers revealed, and the sensitivity $\mathscr{S}$ of the interests disclosed. The latter measures the sensitivity of confidential data, while the former quantifies the difficulty of identifying the individual to whom the disclosed data belongs.

Both metrics will take values in the closed interval [0,1], although might be best reported as percentages. They have been specially adapted to the specific needs of a privacy-protection service or privacy dashboard, particularly in that they should convey an intuitive meaning to users, and thus, useful feedback in their configuration and set-up of privacy options.

As both can be interpreted as roughly independent probabilities, the privacy-protection service or privacy dashboard can be chosen to combine them in the form of a product, or a geometric average, should a single metric be preferred. Hence, one may define the combined privacy metric as

$$\mathscr{P} = \sqrt{\mathscr{A} \, \mathscr{S}},$$

also expressible as a percentage. By virtue of the arithmetic-geometric inequality, the square-root normalization yields a geometric average which is somewhat more conservative than the arithmetic average, while guaranteeing that similar scores for $\mathscr{A}$ and $\mathscr{S}$ yield a consistent score for $\mathscr{P}$, in other words,

$$\mathscr{A} = \mathscr{S}$$

implies

$$\mathscr{A} = \mathscr{P} = \mathscr{S}.$$

More specifically,

$$0 \le \min\{\mathscr{A}, \mathscr{S}\} \le \mathscr{P} \le \frac{\mathscr{A} + \mathscr{S}}{2} \le \max\{\mathscr{A}, \mathscr{S}\} \le 1.$$

It is another aspect of the invention, a connected or internet-enabled device configured to run the method for establishing user-controlled privacy settings in payment systems according to data parameters defined as metrics of an algorithmic specification for their computation, such that said connected device takes advantage of the benefits of the described method, said electronic device being preferably internet-enabled.

It is another aspect of the invention to create a profile of purchasing interests of the overall population under data scarcity.

In the event of scenario involving data scarcity, to be expected during the initial deployment of any privacy-enhanced payment systems. With insufficient activity data, the computation of profiles of interests must rely on more robust estimators, of somewhat greater complexity. As logged data becomes available in the longer run, it will be safe to resort to the simpler form of these estimates, already described.

The computation of the population's profile $\bar{p}$ will make use of preliminary computations that may be seen as user profiles. As these preliminary profiles will be refined in the next subsection, to prevent confusion, we shall denote them by $q$. As before, let $n_i$ denote the amount of activity in category $i$, and $n = \sum_{i=1}^{m} n_i$ the total activity, for a given user. Regardless of whether $n \gg m$, for each user we preliminarily estimate its profile $q$ according to Laplace's rule of succession, which yields

$$q_i = \frac{(\# \text{ of occurrences in category } i) + 1}{(\text{total \# of occurrences}) + (\# \text{ of categories})} = \frac{n_i + 1}{n + m}.$$

Observe that the preliminary user profile estimate $q$ takes the uniform distribution $u = \left(\frac{1}{m}\right)_{i=1}^{m}$ as starting value, and converges towards the somewhat less reliable maxi-mum-likelihood estimate $\frac{n_i}{n}$ as the logged activity increases. Precisely, define $\lambda_n = \frac{n}{n+m}$, which starts off as 0 in the absence of activity, $n = 0$, and tends to 1 in the limit of increasing activity, $n \to \infty$. Then,

$$q_i = \lambda_n \frac{n_i}{n} + (1 - \lambda_n)\frac{1}{m} \, ,$$

that is, $q$ is a convex combination of the ML estimate and the uniform distribution governed by a reliability weight $\lambda_n$.

Once the preliminary profile $q^{(u)}$ has been computed for each individual user $u$, the population's profile $\overline{p}$ is estimated simply as the average

$$\overline{p} = \frac{1}{\#\text{ of users}} \sum_u q^{(u)} \, ,$$

unadjusted by user activity, as before.

It is recommended the use of Laplace's estimate during the initial deployment of digital payments systems and the foreseeable scarcity of reliable activity data. Although overall, aggregated activity will quickly translate into abundant data, and consequently the ML estimate should soon become adequate, this need not be the case for each individual user.

Laplace's estimator will be revisited in the next subsection, devoted to the computation of profiles of individual users $p$ newly added to the system, in a slightly more elaborate form than the preliminary computations $q$ merely used for the average $\overline{p}$. We would like to recall that Laplace's rule of succession is fairly common in other fields of engineering. It finds application, for instance, in the estimation of bit probabilities in arithmetic coding of video data.

Last but not least, note that the population's profile $\overline{p}$ will be initially biased towards the uniform distribution. This will prove convenient in the calculation of the sensitivity, or 'privacy of consumer habits', metric, and conforms with the statistical principle of indifference or insufficient reason originally proposed by Bernouilli and Laplace.

Before we resort to Laplace's rule of succession in a somewhat more general form, for the estimation of individual user profiles under data scarcity, we would like to make a quick digression to briefly sketch the reasoning behind it. Assume that a discrete PMF $\Theta$, viewed as a random variable, follows a Dirichlet distribution of parameter $\alpha$. Dirichlet distributions and the Kullback-Leibler divergence used later on as privacy metric can be related, but the details are perhaps too technical for the purposes of this report. Suppose further that the random variable $X$ conditioned on $\Theta$ is multinomial, so that it models the outcome of $n$ independent, identically distributed trials into $m$ categories with said PMF. It turns out that the Dirichlet distribution is a conjugate prior for the multinomial; precisely, the posterior distribution of the unobserved $\Theta$ given the observation $X$ is also Dirichlet, with parameter $(\alpha_i + n_i)_{i=1}^m$. The mean-squared error (MSE) estimate of $\Theta$ is simply the mean of the posterior, $\frac{n_i + \alpha_i}{n + \sum_i \alpha_i}$. La place's succession rule is nothing but the special case when the prior is uniformly distributed on the probability simplex, with parameter $\alpha = (1)_{i=1}^m$ and $\sum_i \alpha_i = m$.

It is another aspect of the invention to create a profile of purchasing interests of new users with insufficient data.

The computation of the histogram $p$ of relative interests for new users of a digital pay-ment under data scarcity is similar to that of the entire population $\overline{p}$, in the sense that they rely on a form of Laplace's rule of succession, and that the ML estimate will be unreliable in the absence of sufficient data.

Specifically, it is recommended that the natural extension of Laplace's rule of succession be used for the estimation of the profile $p$ of user interests with scarce data, but combined with the average's profile $\overline{p}$ instead of the uniform one $u = \left(\frac{1}{m}\right)_{i=1}^m$. As before, let $n_i$ denote the amount of activity in category $i$, $n = \sum_{i=1}^m n_i$ the total activity, and $\lambda_n = \frac{n}{n+m}$ the reliability weight, for each user. We estimate the individual profile of interests as

$$p_i = \lambda_n \frac{n_i}{n} + (1 - \lambda_n)\overline{p}_i = \frac{n_i + m\,\overline{p}_i}{n + m} \, .$$

It must be noted that $p_i = \overline{p}_i$ initially, in the absence of activity, for $n = 0$, and that $p_i$ will tend towards the simpler ML estimate $\frac{n_i}{n}$ in the limit of increasing activity $n \to \infty$.

Starting off data-scarce profiles as the average profile will have important advantages in the computation of the initial value of the privacy metric, as we shall see. Periodically, as $\bar{p}$ is updated, $p$ can also be refined. Incidentally, our proposal coincides with the MSE estimate for a Dirichlet prior of parameter $\alpha = m\,\bar{p}$ and mean $\bar{p}$.

Clearly, profiles $p$ computed from extensive data, available from long-term users, may simply be approximated via the simpler ML formula $p_i = \frac{n_i}{n}$, which does not depend on $\bar{p}$ and will not need periodic updates, whenever $n \gg m$.

For those users who choose to explicitly declare a profile of interests to the digital payment system, it may be selected as initial profile in lieu of the population's, while keeping the same exact moving average determined by $\lambda_n$ between the relative observed frequencies $\frac{n_i}{n}$ and the declared profile in lieu of $\bar{p}$. On the other hand, interests explicitly declared need not be an accurate introspection of a user's manifested preferences. To account for a discrepancy, a moving average between the relative observed frequencies $\frac{n_i}{n}$ and the declared profile in lieu of $\bar{p}$ may be preferable. Any of the subparameters $m$ and $n$ in the weight $\lambda_n$ could be tweaked to balance, that is, to slow down or to speed up, the update.

It is another aspect of the invention to consider a Kullback-Leibler divergence of partial profiles.

We now address the important case when the user chooses to reveal only the part of the profile of interests $p$ corresponding to a subset of the available categories

$$\rho = \sum_{i \in \mathscr{S}} p_i$$

the probability that a purchase is made in a

category within $\mathscr{S}$, and the PMFs $q$ and $r$ conditioned on the induced partition:

$$q_i = \begin{cases} \dfrac{p_i}{\rho}, & i \in \mathscr{S} \\ 0, & \text{otherwise} \end{cases} , \quad r_i = \begin{cases} \dfrac{p_i}{1-\rho}, & i \notin \mathscr{S} \\ 0, & \text{otherwise} \end{cases} .$$

The possible candidates for the entire PMF $p$, from the perspective of the service provider, conform to the equation

$$p = \rho q + (1-\rho) r ,$$

but $\rho$ and $r$ remain unknown to him. Similarly define

$$\bar{\rho} = \sum_{i \in \mathscr{S}} \bar{p}_i$$

and

$$\bar{q}_i = \begin{cases} \dfrac{\bar{p}_i}{\bar{\rho}}, & i \in \mathscr{S} \\ 0, & \text{otherwise} \end{cases} .$$

A privacy attacker might assume the most likely profile $p$ among those consistent with the observed partial profile $q$, which, according to Jaynes' rationale, would be the profile with minimum Kullback-Leibler divergence. Additional technical considerations also advocate in favor of this minimum, as an approximate representative not only of the most likely profile, but of all the possible profiles.

Accordingly, we define the effective Kullback-Leibler divergence

$$D_{\text{eff}} = \min_{\rho, r} D(\rho q + (1 - \rho)r \,\|\, p) \ .$$

Consider the unnormalized divergence

$$d = D(q\|\overline{p}) = \sum_{i \in \mathscr{I}} q_i \log \frac{q_i}{\overline{p}_i} = D(q\|\overline{q}) - \log \overline{\rho}$$

($\overline{p}$ in the above expression for $d$ is purposefully unnormalized by $\overline{\rho}$). Let $b$ be the basis of the logarithms, arbitrary but assumed consistent throughout this discussion. It can be shown that the solution to the convex minimization problem at hand gives the effective divergence

$$D_{\text{eff}} = -\log\left(1 - \overline{\rho} + \overline{\rho}\, b^{-D(q\|\overline{p})}\right) = -\log\left(1 - \overline{\rho} + b^{-d}\right) \ .$$

The sensitivity, or 'privacy of consumer habits' $\mathscr{S}$ corresponding to this effective divergence is computed in an entirely analogous manner, as the percentage of users with a higher or equal divergence, effective or not. It follows immediately from the definition of effective divergence that $D_{\text{eff}} \leq D(p\|\overline{p})$, which means that the sensitivity score associated with a profile of interests can only increase as categories are hidden from the service provider by the user. This reduction in divergence would not be guaranteed if we naively used $D(q\|\overline{q})$ in lieu of $D_{\text{eff}}$.

By way of non-limiting example, the attached drawings show an illustration of the method for establishing user-controlled privacy settings in payment systems according to data parameters defined as metrics of an algorithmic specification for their computation, constituted in accordance with the invention. Other features and advantages of said method, which is the subject of the present invention, will become apparent from the description of a preferred, albeit non-exclusive, embodiment illustrated by way of non-limiting example in the accompanying drawings, in which:

BRIEF DESCRIPTION OF THE DRAWINGS

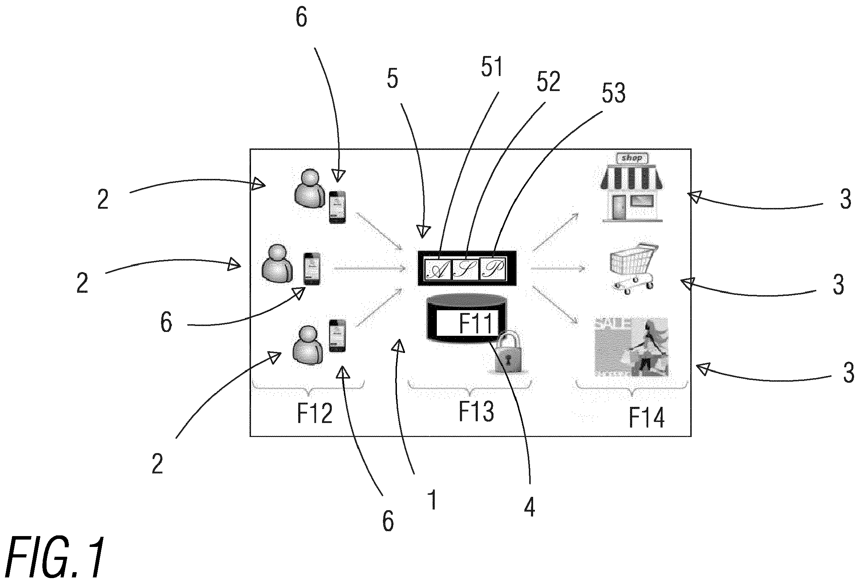

Figure 1.- This is a scheme to show the trust model, according to the present invention, where users entrust their private data to the privacy-protection service or privacy dashboard, which acts as a trusted third party in charge of protecting this data. Service providers, on the other hand, are potentially untrusted.

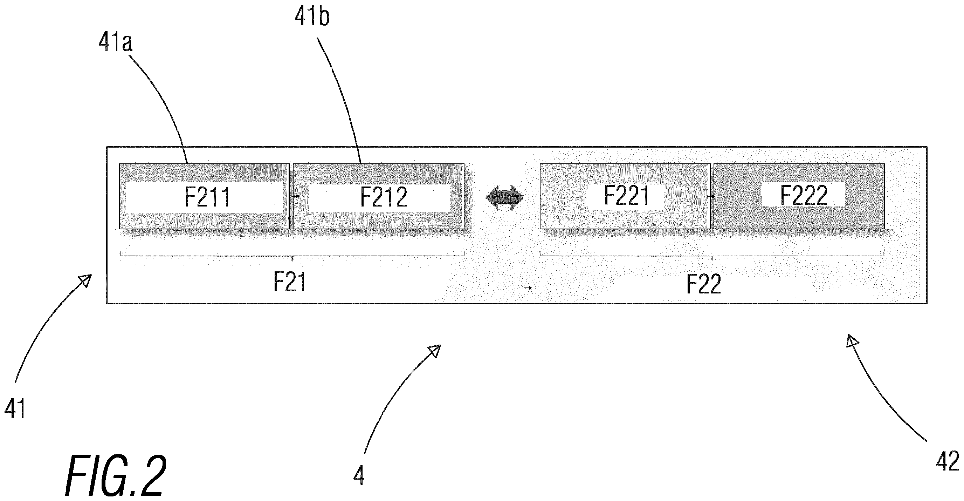

Figure 2.- This is a scheme to show how, according to the present invention, sensitive information may be decomposed into identifying attributes, shopping interests or transactions, and location. The latter two are also referred to as confidential attributes.

Figure 3.- This is a scheme to show, according to the present invention, a conceptual example of $k$-anonymous micro-aggregation of published data with $k$=3, showing hourly wages and consumer profiles as confidential attributes, in relation to demographic variables, namely gender, age and post code, as quasi-identifiers.

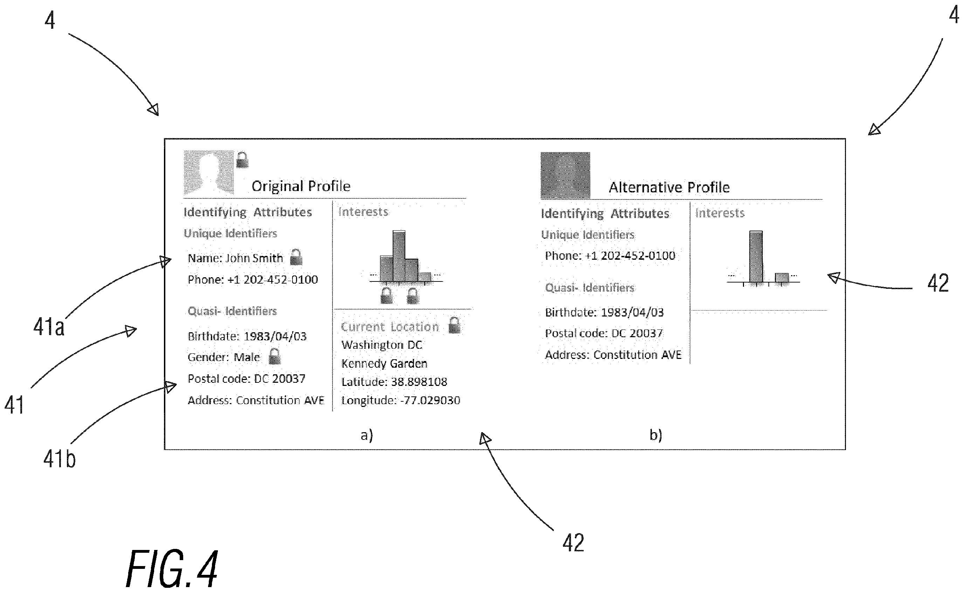

Figure 4.- This is a scheme to show, according to the present invention, how a user selects which private data they wish to show to a given seller. The selected configuration or alternative profile (b) is the information disclosed to this seller. The original profile (a) is kept safe in the privacy-protection service, or privacy dashboard server.

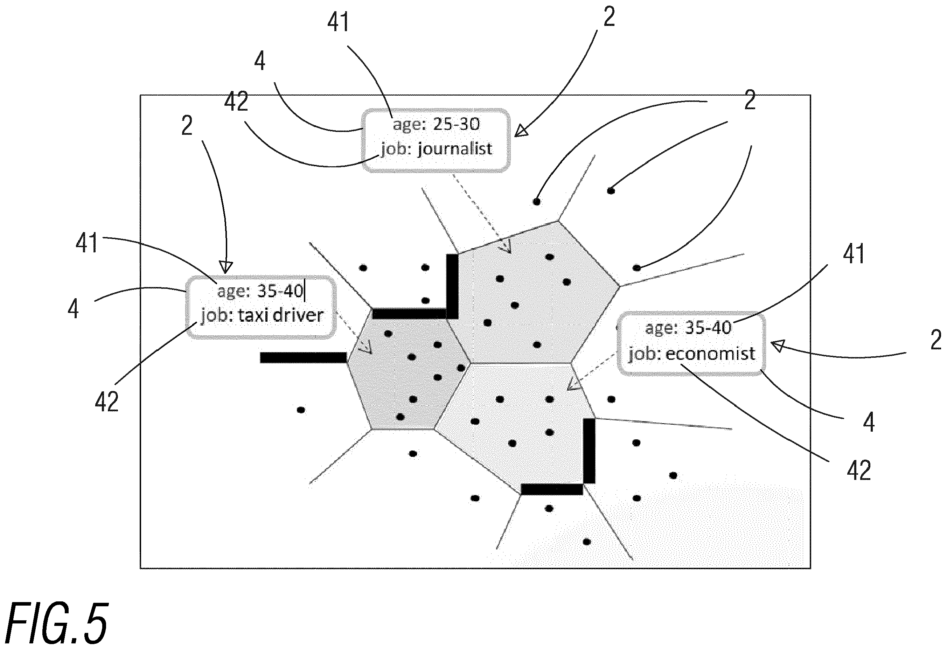

Figure 5.- This is a scheme to show, according to the present invention, used $k$-anonymity is used to measure the anonymity of the identifiers and quasi-identifiers included in a user profile. The figure illustrates a 6-anonymous group of profiles of users between 25-30 years of age whose profession is journalism. This means that there are 6 users who share the same values of the quasi-identifiers job and age.

DESCRIPTION OF A PREFERRED EMBODIMENT

In light of aforementioned figures, and in accordance with the numbering used, it is possible to observe therein a preferred illustrative embodiment of the invention, which comprises the parts and components indicated and described in detail below.

Figure 1 is a scheme to show the trust model, where users **2** entrust their confidential data to the privacy-respecting service or privacy managing platform, which acts as a trusted third party in charge of protecting this data. It is possible to see several users **2** with an connected device **6** in a digital environment **1,** in which a privacy-protection service or privacy dashboard comprises an amount of configuration profiles **4** with privacy metrics **5,** as a demographic anonymity metric 51, a privacy of consumer habits metric 52, and a combined privacy metric 53. After being processed by the privacy-respecting service or privacy managing platform, the information arrives to the data holder or data receiver 3.

Figure 2 is a scheme to show how sensitive information may be decomposed into identifying attributes or identifiers 41a, shopping interests, and location. The latter two are also referred to as confidential attributes 42 a. It is possible to see a representation of a configuration profile 4, which comprises personal data 41, with at least one identifier 41a, and at least one key attribute 41b, and also confidential data 42.

Figure 3 is an scheme to show a conceptual example of *kk*-anonymous microaggregation of published data with *k*=3, showing hourly wages and consumer profiles as confidential attributes 42a, in relation to demographic variables, namely gender, age and postcode, as quasi-identifiers or key attributes 41b. It is possible to see a configuration profile 4 in the form of a data list, comprising identifiers 41a, as the name and surname, and key attribute 41b or quasi-identifiers, as the gender, age, and postcode, in the second list, slightly deleted, as personal data 41. Finally, also included are confidential data 42 with the confidential attributes 42a, such as hourly wage, and a graphical representation of the consumer profile.

Figure 4 is a scheme to show, how a user 2 selects which private data or confidential data 42 they wish to show to a given seller. The selected configuration profile 4 or alternative profile is the information disclosed to this seller. The original profile, with the personal data 41, is kept safe in the privacy-protection service, or privacy dashboard server. It is possible to see a configuration profile 4 comprising personal data 41, as the identifier 41a, with the name and telephone number, and key attributes 41b such as the birthdate, gender, postcode, and generic address, and confidential data 42, with specific address, and GPS coordinates.

Figure 5 is a scheme to show how *k*-anonymity is used to measure the anonymity of the identifiers 41a and quasi-identifiers or key attributes 41b included in a user 2 configuration profile 4. Figure 5 illustrates a six-anonymous group of configuration profiles 4 of users 2 between 25-30 years of age whose profession is journalism. This means that there are six users who share the same values of the quasi- identifiers or key attributes 41b, such as job and age. It is therefore possible to see a generic user 2 with a configuration profile 4 comprising personal data 41 and confidential data 42

More in particular, the method for establishing user-controlled privacy settings in payment systems according to data parameters defined as metrics of an algorithmic specification for their computation, comprises the steps of displaying a plurality of optional configuration profiles 4 regarding access permissions to the user's 2 personal data 41, selecting at least one configuration profile 4 established by the user 2, and sharing a varying amount of confidential data 42 of the user 2, based on the selected configuration profile 4 within the digital environment 1.

Furthermore, the configuration profile 4 comprises personal data 41 and confidential data 42.

More specifically, the method further comprises the step of determining a privacy metric 5 as a quantitative measurement of a privacy risk associated with at least one configuration profile 4.

According to another aspect of the invention, the privacy metric 5 is a demographic anonymity metric 51 '$\mathscr{A}$', defined

$$\mathscr{A} = \frac{k-1}{n-1},$$

wherein '*n*' is the total number of users 2 of the digital environment 1, and '*k*' is the number of users 2 of the digital environment 1 sharing a common value for a tuple of key attributes 41b.

Advantageously, the profile of purchasing habits or interests of each user 2 is defined as a discrete probability distribution across predefined categories of interest.

In a preferred embodiment of the invention, the profile of purchasing interests of the overall population of users 2 is defined as a discrete probability distribution across predefined categories of interest.

According to another preferred embodiment of the invention, a discrepancy between the user's 2 probability distribution and the overall population's probability distribution is measured by means of the Kullback-Leibler divergence.

Additionally, the privacy metric 5 is a privacy of consumer habits metric 52 '$\mathscr{S}$', defined as the probability

$$\mathscr{S} = \Pr\{D(P\|\bar{p}) \geq D(p\|\bar{p})\}$$

,

wherein '$P$' is a random variable representing the individual configuration profile 4 of a random user 2, and '$p$' is the individual configuration profile 4 of the specific user 2 to whom the metric refers.

More specifically, the Kullback-Leibler divergence is defined as

$$D(p\|\bar{p}) = \sum_{i=1}^{m} p_i \log \frac{p_i}{\bar{p}_i}$$

Additionally, that '$p$' is defined as $p = (p_i)_{i=1}^{m} = (p_1, \dots, p_m)$, as a probability mass function (PMF) on the

$$\sum_{i=1}^{m} p_i = 1.$$

alphabet $\{1,...,m\}$, satisfying $p_i \geq 0$ and

Wherein '$p_i$' is defined as $p_i = \dfrac{\text{\# of occurrences in category } i}{\text{total \# of occurrences}} = \dfrac{n_i}{n}$, '$\bar{p}$' is defined as

$$\bar{p} = \frac{1}{\text{\# of reliable users}} \sum_{u} p^{(u)}$$

' and '$\bar{p}_i$' is the component '$i$' of '$\bar{p}$'

According to a preferred embodiment of the invention, the privacy metric 5 is a combined privacy metric 53 '$\mathscr{P}$' of the demographic anonymity metric 51 and the privacy of consumer habits metric 52, defined as

$$\mathscr{P} = \sqrt{\mathscr{A}\,\mathscr{S}}$$

The invention is also related to an connected or electronic device 6configured to run the method for establishing user-controlled privacy settings in payment systems according to data parameters defined as metrics of an algorithmic specification for their computation, described above.

The details, the forms, the steps and other accessory elements used in the method for establishing user-controlled privacy settings in payment systems according to data parameters defined as metrics of an algorithmic specification for their computation, may be suitably replaced by others that are technically equivalent, and which do not depart from the essential nature of the invention or the scope defined by the claims, which are included in the following list.

**Glossary of number references:**

1      digital environment

2       user
3       data holder
4       configuration profile
41      personal data
41a     identifier
41b     key attribute
42      confidential data
42a     confidential attribute
5       privacy metric
51      demographic anonymity metric
52      privacy of consumer habits metric
53      combined privacy metric
6       connected device

**Glossary of text references:**

F11     User's private data
F12     Users
F13     Privacy dashboard system (trusted)
F14     Sellers (untrusted)
F21     Identifying Attributes / Personal Data
F211    (Unique) Identifiers
F212    Quasi-Identifiers
F22     Confidential Attributes
F221    Interests
F222    Location
F31     Identifiers
F32     Quasi-Identifiers
F33     Confidential Attributes
F34     Micro-aggregated Quasi-Identifiers
F35     Confidential Attributes
F36     k-Anonymized Records

**Claims**

1.  Method for establishing user-controlled privacy settings in payment systems according to data parameters defined as metrics of an algorithmic specification for their computation, comprising the steps of:

    - displaying a plurality of optional configuration profiles (4) regarding access permissions to the user's (2) personal data (41),
    - selecting at least one configuration profile (4) established by the user (2)
    - sharing a varying amount of confidential data (42) of the user (2), based on the selected configuration profile (4) within the digital environment (1).

2.  Method for establishing user-controlled privacy settings in payment systems according to data parameters defined as metrics of an algorithmic specification for their computation, according to claim 1, **characterized in that** the configuration profile (4) comprises personal data (41) and confidential data (42).

3.  Method for establishing user-controlled privacy settings in payment systems according to data parameters defined as metrics of an algorithmic specification for their computation, according to claim 2, **characterized in that** it further comprises the step of determining a privacy metric (5) as a quantitative measurement of a privacy risk associated with at least one configuration profile (4).

4.  Method for establishing user-controlled privacy settings in payment systems according to data parameters defined as metrics of an algorithmic specification for their computation, according to claim 3, **characterized in that** the privacy metric (5) is a demographic anonymity metric (51) '$\mathscr{A}$', defined

$$\mathscr{A} = \frac{k-1}{n-1},$$

wherein '*n*' is the total number of users (2) of the digital environment (1), and '*k*' is the number of users (2) of the digital environment (1) sharing a common value for a tuple of key attributes (41b).

5. Method for establishing user-controlled privacy settings in payment systems according to data parameters defined as metrics of an algorithmic specification for their computation, according to claim 3, **characterized in that** the profile of purchasing habits or interests of each user (2) is defined as a discrete probability distribution across predefined categories of interest.

6. Method for establishing user-controlled privacy settings in payment systems according to data parameters defined as metrics of an algorithmic specification for their computation, according to claim 5, **characterized in that** the profile of purchasing interests of the overall population of users (2) is defined as a discrete probability distribution across predefined categories of interest.

7. Method for establishing user-controlled privacy settings in payment systems according to data parameters defined as metrics of an algorithmic specification for their computation, according to claim 6, **characterized in that** a discrepancy between the user's (2) probability distribution and the overall population's probability distribution is measured by means of the Kullback-Leibler divergence.

8. Method for establishing user-controlled privacy settings in payment systems according to data parameters defined as metrics of an algorithmic specification for their computation, according to claim 7, **characterized in that** the privacy metric (5) is a privacy of consumer habits metric (52) '$\mathscr{S}$', defined as_the probability

$$\mathscr{S} = \Pr\{D(P\|\bar{p}) \geq D(p\|\bar{p})\},$$

wherein '*P*' is a random variable representing the individual configuration profile (4) of a random user (2), and '*p*' is the individual configuration profile (4) of the specific user (2) to whom the metric refers.

9. Method for establishing user-controlled privacy settings in payment systems according to data parameters defined as metrics of an algorithmic specification for their computation, according to claim 8, **characterized in that** the Kullback-Leibler divergence is defined as

$$D(p\|\bar{p}) = \sum_{i=1}^{m} p_i \log \frac{p_i}{\bar{p}_i}$$

10. Method for establishing user-controlled privacy settings in payment systems according to data parameters defined as metrics of an algorithmic specification for their computation, according to claim 9, **characterized in that** '*p*' is defined as

$$p = (p_i)_{i=1}^{m} = (p_1, \ldots, p_m)$$

, as a probability mass function (PMF) on the alphabet {1,...,m}, satisfying

$$p_i \geq 0 \text{ and } \sum_{i=1}^{m} p_i = 1.$$

11. Method for establishing user-controlled privacy settings in payment systems according to data parameters defined as metrics of an algorithmic specification for their computation, according to claim 10, **characterized in that** '$p_i$' is defined as

$$p_i = \frac{\text{\# of occurrences in category } i}{\text{total \# of occurrences}} = \frac{n_i}{n}$$

12. Method for establishing user-controlled privacy settings in payment systems according to data parameters defined as metrics of an algorithmic specification for their computation, according to claim 9, **characterized in that** '$\overline{p}$' is defined as

$$\overline{p} = \frac{1}{\text{\# of reliable users}} \sum_{u} p^{(u)}$$

13. Method for establishing user-controlled privacy settings in payment systems according to data parameters defined as metrics of an algorithmic specification for their computation, according to claim 9, **characterized in that** '$\overline{p_i}$' is the component '$i$' of '$\overline{p}$'

14. Method for establishing user-controlled privacy settings in payment systems according to data parameters defined as metrics of an algorithmic specification for their computation, according to claims 4 and 8, **characterized in that** the privacy metric (5) is a combined privacy metric (53) '$\mathscr{P}$' of the demographic anonymity metric (51) and the privacy of consumer habits metric (52), defined as

$$\mathscr{P} = \sqrt{\mathscr{A}\,\mathscr{S}}$$

15. Connected device (6) configured to run the method for establishing user-controlled privacy settings in payment systems according to data parameters defined as metrics of an algorithmic specification for their computation, of any preceding claim.

*FIG.1*

*FIG.2*

FIG.3

FIG.4

*FIG.5*

Europäisches
Patentamt

European
Patent Office

Office européen
des brevets

# EUROPEAN SEARCH REPORT

Application Number

EP 18 38 2930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/126690 A1 (ANONOS INC [US]) 11 August 2016 (2016-08-11) * figures 1, 1C-1, 1C-2 * * paragraphs [0013] - [0014] * * paragraphs [0195], [0221], [0241] * * paragraphs [0248] - [0251] * * paragraph [0360] * ----- | 1-15 | INV. G06Q30/06 G06Q20/38 |
| A | US 2002/174073 A1 (NORDMAN IAN [FI] ET AL) 21 November 2002 (2002-11-21) * the whole document * ----- | 1-15 | |

TECHNICAL FIELDS
SEARCHED (IPC)

G06Q
G07G

The present search report has been drawn up for all claims

| Place of search | Date of completion of the search | Examiner |
|---|---|---|
| The Hague | 20 March 2019 | Meijs, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 38 2930

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2019

| Patent document cited in search report | Publication date | Patent family member(s) | Publication date |
|---|---|---|---|
| WO 2016126690 A1 | 11-08-2016 | CA 2975441 A1<br>EP 3254226 A1<br>WO 2016126690 A1 | 11-08-2016<br>13-12-2017<br>11-08-2016 |
| US 2002174073 A1 | 21-11-2002 | AU 2002302883 A1<br>EP 1440356 A2<br>EP 1962169 A1<br>EP 3306436 A1<br>US 2002174073 A1<br>WO 02099556 A2 | 16-12-2002<br>28-07-2004<br>27-08-2008<br>11-04-2018<br>21-11-2002<br>12-12-2002 |

EPO FORM P0459

For more details about this annex : see Official Journal of the European Patent Office, No. 12/82

**EP 3 671 611 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. SWEENEY.** Simple demographics often identify people uniquely. Carnegie Mellon Univ. Privacy Working Paper 3,